# EUROPEAN PATENT APPLICATION

(11) **EP 0 666 154 A1**
(43) Date of publication of application: **09.08.1995**
(21) Application number: 95300613.7
(22) Date of filing: 31.01.1995
(51) Int. Cl.: B27C 3/06, B23Q 35/02, B23B 39/16

(54) **drilling device**

(30) Priority: 04.02.1994 GB 9402120
(71) Applicant: Black & Decker Inc., Newark Delaware 19711 (US)
(72) Inventor: Sassman, Franz, A-6322 Kirchbichl, Tirol (AT)
(74) Representative: Stagg, Diana Christine

(57) **Abstract**

A multiple hole drilling device 1 comprising a frame 3 defining a first surface 17 for abutment against a workpiece 19, 21 and drive means 5, 7 slidably mounted on the frame 3 for driving a plurality of drill bits 13, wherein, during use, the drive means 5, 7 slide relative to the frame 3 to plunge the drill bits 13 through the first surface 17 and into the workpiece 19, 21. If a bearing surface 29 is also provided, accurate positioning of drill holes can be achieved to enable accurate dowel joints to be produced.

## Description

This invention relates to drilling devices, and in particular to a multiple hole drilling device which can be used to drill holes for dowel joints or the like.

It is well known to use dowel joints to join two pieces of wood together, especially when a relatively thin edge of a piece of wood is to be abutted against a flat surface of another piece of wood. However, when preparing holes in the pieces of wood to receive the dowel to produce the joint, it has in the past been very difficult to drill the holes sufficiently accurately to produce a neat and tidy joint. As a result, biscuit joints have often been used instead of dowel joints, since they are easier to manufacture. In this regard, a biscuit joint simply needs a thin groove to be cut along the surfaces of the two workpieces to be joined so that a thin flat jointing strip can be received in the two grooves with a friction fit. When producing a biscuit joint, it is necessary only to ensure that the grooves are straight so that the jointing strip can be received in both grooves. In contrast, when using dowel joints, it is essential that the holes are perfectly aligned throughout the complete length of the two workpieces since, if this is not the case, the pieces of dowel joining opposing holes will not fit into the respective holes.

In view of the foregoing, the present invention aims to provide a drilling device which facilitates the drilling of dowel holes accurately in the required positions, thereby simplifying the production of dowel joints. Further, the present invention aims to provide a hand-held drilling machine which can be used to produce dowel joints wherever the joints are needed, thereby avoiding the necessity to bring the work piece or pieces to a work bench or work room for drilling.

According to the present invention, there is provided a multiple hole drilling device comprising a frame defining a first surface for abutment against a workpiece and drive means slidably mounted on the frame for driving a plurality of drill bits, wherein, during use, the drive means slide relative to the frame to plunge the drill bits through the first surface and into a workpiece. By plunging the drill bits through the first surface which abuts the workpiece, the dowel holes are always formed at the same angle, preferably perpendicular, to the surface of the workpiece.

A bearing surface is preferably provided perpendicular to the first surface for abutting a face of a workpiece. By including a bearing surface, the distance at which the holes are drilled relative to an edge of the workpiece can be accurately repeated.

The bearing surface may be screwed directly to the frame. Alternatively, the bearing surface may be attached to the frame by guide rods.

If the bearing surface is attached to the frame by guide rods, the surface can preferably slide along the guide rods to vary the distance of the bearing surface from the frame. In such an arrangement, the distance of the bearing surface from the frame is preferably controllable by means of coarse/fine adjustments. Further, a distance scale can be provided for indicating the distance of the bearing surface from the drill bits.

As will be appreciated, the drill bits preferably define a row and the bearing surface is parallel to the row.

Preferably an end stop may be provided at each side of the frame for abutting an end of a workpiece. Each end stop is preferably positively attached to the frame of the drilling device and is retractable from an active to an inactive position.

However the end stops are attached to the frame, it is essential that the distance of each end stop to the axis of its closest drill bit be the same in both cases, so that the distances from an adjacent edge of the dowel holes on two pieces of wood being joined together are the same in each case, thereby resulting in a neat joint being formed. With this in mind, it should of course be remembered that the dowel holes formed in one piece of wood will be drilled with the piece of wood abutting the end stop on one side of the frame of the drilling device and the dowel holes in the second piece of wood will be drilled with the edge of the second workpiece abutting the end stop on the other side of the drilling device.

An extension bar may be provided to extend the first surface sideways, the extension bar including means for defining a position of the drill bits relative to a hole already drilled in a workpiece.

Preferably, a plurality of apertures are defined in the extension bar, each aperture being adapted to accommodate a pin engaging a hole already drilled in a workpiece. By using a pin extending through the extension bar, additional dowel holes can be drilled in a workpiece away from an end of the workpiece whilst still being able to repeat the hole positions on the other of the two workpieces to be joined together.

The holes in the extension bar are preferably equally spaced along the extension bar.

A clamping surface may be provided, attached to the frame, for opposing the first surface of the frame to clamp a workpiece therebetween.

The drive means preferably comprise a motor and a gear box for driving a row of three drill bits. The drive means could, of course, be used to drive more or less drill bits, although three drill bits is the preferred arrangement.

Specific embodiments of the present invention are now described, by way of example only, with reference to the accompanying drawings, in which:-
Figure 1 is a partially exploded perspective view of a drilling device according to the present invention;
Figure 2 is a perspective view of the drilling device of Figure 1 positioned on a side of a first workpiece;
Figure 3 is a perspective view of the drilling device of Figure 1 positioned on a main surface of a second workpiece;
Figure 4 is a perspective view of the drilling device of Figure 1 mounted on a workpiece as in Figure 3, but wherein a bearing surface of the device is mounted on rods to space the bearing surface from the frame of the drilling device; and
Figure 5 is a perspective view of the drilling device of Figure 1 incorporating a clamping surface opposing the first surface for clamping a workpiece therebetween.

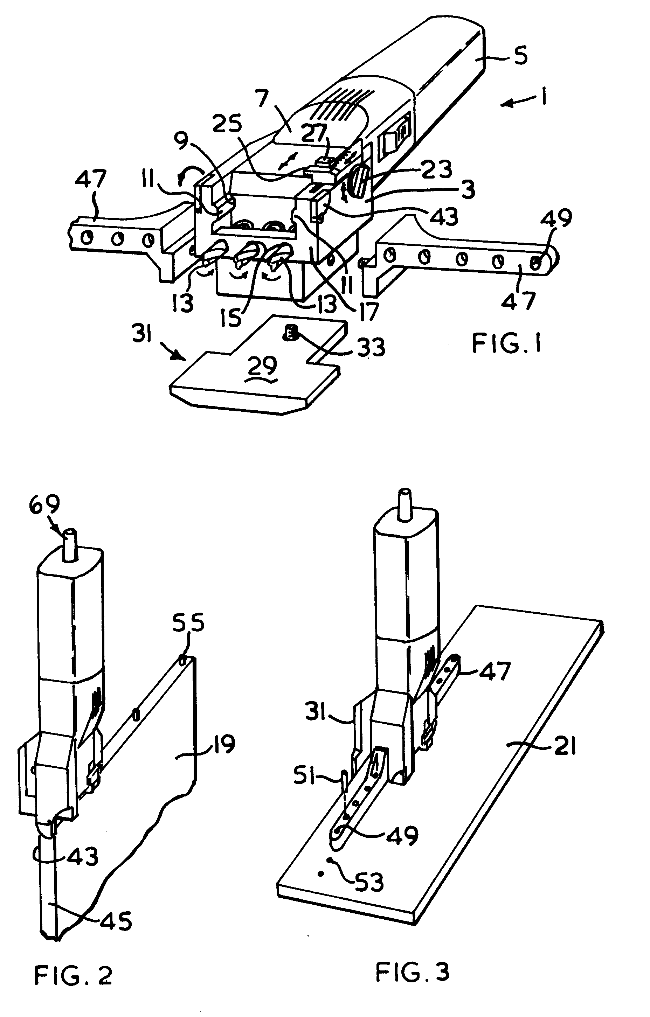

With reference to the drawings, a multiple hole drilling device (or dowel jointer) 1 comprises a frame 3 carrying a motor 5 and gearbox 7. The gearbox 7 includes a pair of grooves 9 which accept rails 11 formed on the inside surface of a frame 3 to enable the gearbox 7 and motor 5 to slide relative to the frame 3. Three drill bits 13 attached via the gearbox 7 to the motor 5 are arranged to pass through corresponding holes 15 formed through a first surface 17 of the frame 3, as shown in Figures 1 and 5.

During drilling, the motor 5 is switched on, the first surface 17 of the frame 3 is placed against a workpiece 19,21 and the motor 5 and the gearbox 7 are slid relative to the frame 3 to plunge the drill bits 13 through the first surface 17 and into the workpiece 19,21. The depth of plunging of the drill bits 13 can be adjusted by means of a control knob 23 which adjusts the position of a stop 25 on the frame 3 against which a projection 27 on the gearbox 7 abuts when the drill bits 13 have plunged their maximum depth. In a preferred embodiment, the maximum plunge depth is likely to be in the region of 30 millimetres and the motor 5 will drive the drill bits 13 at a speed of between 8,000-10,000 rpm.

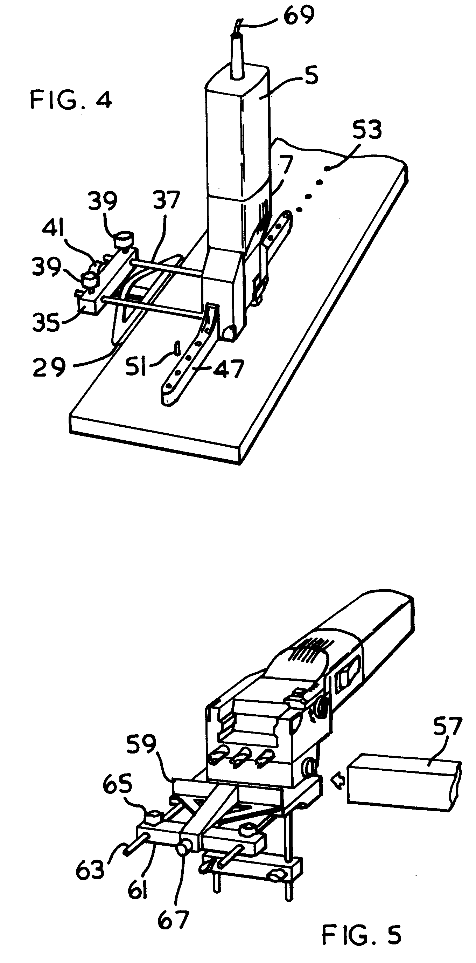

Although a plurality of holes can be drilled in a workpiece simply by placing the first surface 17 of the frame 3 against the workpiece and plunging the drill bits 13 as described above, if more accurate positioning of the drill holes is required, such as during the making of dowel joints, a bearing surface 29 is also used. In the arrangements shown in Figures 2,3 and 4, the bearing surface 29 abuts against a face surface (Figure 2) or a side surface (Figures 3 and 4) of a workpiece. In Figures 2 and 3, the bearing surface 29 is provided by a T-shaped component 31 (cf. Figure 1) which is attached to the frame 3 by means of a screw 33 such that the bearing surface 29 is substantially perpendicular to the first surface 17 of the frame 3. As a result, the first surface 17 can be placed against one surface of the workpiece 19,21 and the bearing surface 29 can be brought into contact with another surface of the workpiece 19,21 to position the drilling device 1 accurately on the workpiece. Thus, the distance of the drill holes from an edge of the workpiece 19,21 can be accurately repeated as the drilling device 1 is moved along the workpiece.

In Figure 4, the bearing surface 29 is mounted via a support block 35 on two rods 37 attached to the frame 3. Coarse adjustment of the position of the bearing surface 29 relative to the frame 3 can be achieved by adjustment of fixing knobs 39 and fine adjustment of the position of the bearing surface 29 can be achieved using the fine adjustment knob 41, as shown in Figure 4. As a result, the distance of the drill bits 13 from an edge of a workpiece can be controlled with accuracy.

As will be appreciated, it is essential that the distance of the drill holes from an end of a first workpiece be identical to that of the drill holes in the corresponding end of a second workpiece to be attached to the first workpiece, if a neat joint is to be obtained. Hence, retractable end stops 43 are formed on either side of the frame 3 for abutting an end 45 of a workpiece 19 (cf. Figure 2). The distance of the drill holes from the top or bottom of the workpiece is dictated by the position of the bearing surface 29, as described above. Thus, once a series of drill holes has been produced in the workpiece 19, beginning at one end with the retractable stop 43 abutting the end 45 of the workpiece, correspondingly positioned drill holes can be produced in the second workpiece 21 by placing the drilling device 1 on the second workpiece 21 with the retractable stop 43 at the other side of the frame 3 abutting the end of the workpiece 21. As mentioned above, the distance of each end stop 43 from its closest drill bit 13 must be the same so that the resulting distance of the first drill hole from its closest end of a workpiece is identical, thereby allowing accurate dowel jointing to take place. The end stops 43 are retractable, since only one end stop 43 is required at any one time.

Moreover, the spacing of the drill bits 13 must be symetrical about the centre line between the two end stops 43 and two drill bits closest to those end stops. Thus, when there are three bits, the one between the two ends must be central. If there were more than three, then they must be symetrical, as just mentioned, although not necessarily evenly spaced, on either side of the centre line. Indeed, they need not even be precisely in-line, although the extent to which the drill bits are out of line dictates the minimum thickness of workpieces which can be joined. Thus it is preferred that the drill bits 13 are in line.

Once the position of the first dowel holes has been determined using the bearing surface 29 and the end stop 43 as shown in Figure 2, the holes are drilled by plunging the drill bits 13 through the first surface 17 of the frame 3. It is then necessary to move the drilling device 1 along the workpiece to drill additional holes. Since it is now not possible to use the end stop 43, an extension bar 47 is attached to the frame 3, as shown in Figures 3 and 4. Although in theory only the one extension bar 47 needs to be used, two extension bars 47 are shown in the drawings. As will be noted, a plurality of equally spaced holes 49 are formed in the extension bar 47. A pin 51 is passed through one of the holes 49 so that it engages a drill hole 53 already formed in the workpiece 21. By remembering which hole in the extension bar 47 was used for engaging which drill hole 53 already formed in the workpiece, additional drill holes can be produced in both first and second workpieces 19,21 as required so that the drill holes in both workpieces coincide to enable pieces of dowel 55 to be received in opposing holes.

As mentioned above, only one extension bar 47 is really needed, since it can be used on either side of the frame 3, as required. To save time in undoing the extension bar 47 each time it needs to be placed on the opposing side of the frame 3, a second extension bar 47 could be left mounted on the frame 3, as shown in Figures 3 and 4.

To ensure that accurate positioning of the drill holes is achieved, the pin 51 is preferably a relatively close fit in the holes 49 of the extension bar 47 and also in the drill holes 53 in the workpieces.

In some applications, it may be preferable to clamp the workpiece 57 against the first surface 17 of the frame 3. In such an application, a clamping surface 59 is provided mounted on the frame 3 in a similar fashion to that of the bearing surface 29 shown in Figure 4 of the drawings. More particularly, the clamping surface 59 is supported by a block 61 slidably received on rods 63. Support block 61 can be coarsely clamped to the rods 63 by means of screw knobs 65 and the clamping surface 59 can be accurately positioned using a fine control knob 67. Hence, the workpiece 57 can be clamped between the clamping surface 59 and the first surface 17. Alternatively, it may be desirable to allow the workpiece 57 to be held against the clamping surface 59 and the bearing surface 29 and not to touch the first surface 17 at all.

Although the motor 5 is shown provided with an electric cable 69 for attachment to a supply of electric power, the motor 5 could in theory be battery operated, possibly with a rechargeable battery.

It will of course be understood that the present invention has been described above purely by way of example, and that modifications of detail can be made within the scope of the invention.

## Claims

**1** A multiple hole drilling device comprising a frame defining a first surface for abutment against a workpiece and drive means slidably mounted on the frame for driving a plurality of drill bits, wherein, during use, the drive means slide relative to the frame to plunge the drill bits through the first surface and into a workpiece.

**2.** A device as claimed in claim 1, wherein a bearing surface is provided perpendicular to the first surface for abutting a face of a workpiece.

**3.** A device as claimed in claim 2, wherein the bearing surface is screwed to the frame.

**4.** A device as claimed in claim 2, wherein the bearing surface is attached to the frame by guide rods.

**5.** A device as claimed in claim 4, wherein the bearing surface can slide on the guide rods to vary the distance of the bearing surface from the frame.

**6.** A device as claimed in any one of claims 2 to 5, wherein the drill bits define a row and the bearing surface is parallel to the row.

**7.** A device as claimed in any preceding claim, wherein a retractable end stop is provided at each side of the frame for abutting an end of a workpiece.

**8.** A device as claimed in claim 7, wherein each retractable end stop is substantially planar and is pivotally mounted on the frame.

**9.** A device as claimed in any preceding claim, wherein an extension bar is provided to extend the first surface sideways, the extension bar including means for defining a position of the drill bits relative to a hole already drilled in a workpiece.

**10.** A device as claimed in claim 9, wherein a plurality of apertures are defined in the extension bar, each aperture being adapted to accommodate a pin for engaging a hole already drilled in a workpiece.

**11.** A device as claimed in claim 10, wherein the holes are equally spaced along the extension bar.

**12.** A device as claimed in any preceding claim, wherein a clamping surface is provided, attached to the frame, for opposing the first surface of the frame to clamp a workpiece therebetween.

**13.** A device as claimed in any preceding claim, wherein the drive means comprise a motor and a gearbox for driving a row of three drill bits.
